# EUROPÄISCHE PATENTSCHRIFT

(11) **EP 2 143 605 B1**
(45) Veröffentlichungstag und Bekanntmachung des Hinweises auf die Patenterteilung: **10.10.2012**
(21) Anmeldenummer: 09008799.0
(22) Anmeldetag: 06.07.2009
(51) Int. Cl.: B60T 7/08, G05G 1/08, G05G 5/00, G05G 5/08

(54) **Drehgeber und elektrisch betätigbare Feststellbremsanlage mit einem Drehgeber**
Rotary encoder and electrically operated fixing brake assembly with a rotary encoder
Encodeur et installation d'un frein de stationnement actionné électriquement doté d'un encodeur

(30) Priorität: 11.07.2008 DE 102008032709
(43) Veröffentlichungstag der Anmeldung: 13.01.2010
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- WO-A1-00/20268
- DE-A1- 10 251 249
- DE-A1-102005 032 509

## Beschreibung

Die Erfindung betrifft einen Drehgeber mit einem in eine elektrische Schaltung eingebundenen Sensorelement und einem um eine Drehachse drehbaren Gebergriff für eine elektrische betätigbare Feststellbremsanlage eines Fahrzeugs, wobei durch Drehung des drehbaren Gebergriffs um die Drehachse verschiedene Betriebszustände der elektrisch betätigbaren Feststellbremsanlage auswählbar sind.

Die Erfindung betrifft weiterhin ein Verfahren zum Betätigen einer elektrisch betätigbaren Feststellbremsanlage eines Fahrzeugs mit einem einen drehbaren Gebergriff und ein in eine elektrische Schaltung eingebundenes Sensorelement umfassenden Drehgeber.

Fahrzeuge verfügen üblicherweise neben einer Betriebsbremse, die zum Abbremsen des Fahrzeugs während des Fahrbetriebs dient, über eine separate Feststellbremse, die geeignet ist, das abgestellte Fahrzeug gegen ein unbeabsichtigtes Wegrollen zu sichern. Aufgrund der unterschiedlichen Aufgabenbereiche von Betriebsbremse und Feststellbremse verfügt der für den Fahrer erreichbare Betätigungsmechanismus der Feststellbremse üblicherweise über eine mechanische Sicherung, die vor dem Betätigen der Feststellbremse manuell durch den Fahrer gelöst werden muss. Diese Sicherung dient insbesondere während der Fahrt, bei der üblicherweise lediglich die Betriebsbremse genutzt wird, als Schutz vor einem unbeabsichtigten Betätigen der Feststellbremse.

Gemäß dem Stand der Technik ist bereits bekannt, die Betätigungseinrichtung der Feststellbremse als einfachen Hebel auszubilden, wobei eine mechanische Sicherung in Form eines Druckknopfes an dem Hebel angeordnet ist. Bei dieser bekannten Ausführungsform muss der Druckknopf während der Betätigung des Hebels gedrückt werden, um die mechanische Sicherung zu lösen.

Aus der DE 102 51 249 A1 ist weiterhin bekannt, eine Feststellbremse mit Hilfe eines Betätigungselements in Form eines Drehschalters zu realisieren.

Der vorliegenden Erfindung liegt die Aufgabe zugrunde, einen Drehschalter als Betätigungselement zu verbessern, wobei insbesondere auf Sicherheit und Bedienkomfort geachtet wird.

Diese Aufgabe wird mit den Merkmalen der unabhängigen Ansprüche gelöst.

Vorteilhafte Ausgestaltungen und Weiterbildungen der Erfindung ergeben sich aus den abhängigen Ansprüchen.

Der erfindungsgemäße Drehgeber baut auf dem gattungsgemäßen Stand der Technik dadurch auf, dass eine mechanische Sperre vorgesehen ist, die ohne äußere Einwirkung verriegelt und eine Drehung des Gebergriffs verhindert. Durch die Anordnung einer mechanischen Sperre, zum Beispiel zwischen dem drehbaren Gebergriff und dem Sensorelement, erreicht der Drehgeber eine gegenüber einem Betätigungshebel mit mechanischer Sperre erhöhte Sicherheit bei der Bedienung, da die Betätigungsrichtung des Drehgebers immer senkrecht zur Zugriffsrichtung liegt. Im Gegensatz zu einem Hebel verfügt der Drehgeber jedoch weiterhin über einen erhöhten Bedienkomfort, da analog zu einem einfachen Drehschalter kürzere Betätigungswege notwendig sind. Die nach einer Entriegelung erfolgende erneute Verriegelung, die automatische bei Wegfall einer zum Entriegeln notwendigen äußeren Einwirkung, beispielsweise einer Kraft, erfolgt, vermeidet ein unbeabsichtigtes Betätigen des Drehgebers.

Vorzugsweise ist weiterhin vorgesehen, dass die mechanische Sperre durch eine Auslenkung des drehbaren Gebergriffs parallel zu der Drehachse des drehbaren Gebergriffs entriegelbar ist. Ist die mechanische Sperre parallel zu der Drehrichtung des drehbaren Gebergriffs entriegelbar, so kann das Lösen der mechanischen Sperre von der zum Betätigen des Drehgebers notwendigen Bewegung entkoppelt werden. Weiterhin wird, abhängig von der Positionierung des Drehgebers im Fahrzeug, der zum Betätigen der Feststellbremse notwendige Bewegungsablauf auch von der Bremsrichtung des Fahrzeugs entkoppelbar, falls über die Feststellbremse bei Ausfall der Betriebsbremse das Fahrzeug abgebremst werden muss. Bei einem Hebel zum Betätigen der Feststellbremse erfolgt die Dosierung bzw. das Betätigen in oder entgegen der Fahrtrichtung, was bei einsetzender Bremswirkung eine erhöhte Konzentration des Fahrers erfordert. Der Drehgeber erlaubt hingegen beim Betätigen eine Bewegungsrichtung senkrecht zur Fahrtrichtung. Dies erhöht insbesondere die Sicherheitsfunktionalität des Drehgebers.

Insbesondere kann vorgesehen sein, dass die mechanische Sperre eine Kombination aus mindestens einer Raste und mindestens einem Zapfen umfasst, wobei jeweils ein Bestandteil der mechanischen Sperre an dem drehbaren Gebergriff und dem Sensorelement angeordnet ist und mindestens ein Zapfen im verriegelten Zustand in einer Raste ruht. Durch diesen Aufbau lässt sich eine einfache mechanische Sperre des Drehgebers als Sicherung realisieren.

Weiterhin kann vorgesehen sein, dass der Drehgeber ein federndes Element umfasst, welches ohne äußere Einwirkung die mechanische Sperre in einem verriegelten Zustand hält beziehungsweise in eine Solche überführt. Das federnde Element, beispielsweise eine Sprung oder eine Schenkelfeder, ist ein zuverlässiges Bauteil, welches geeignet ist, den drehbaren Gebergriff ohne äußere Einwirkung in einem definierten Abstand von dem Sensorelement zu fixieren. Dies erlaubt einen einfachen Aufbau einer ohne äußere Einwirkung selbsttätig verriegelnden mechanischen Sperre. Das federnde Element übernimmt also die Aufgabe der Drehwinkelrückstellung und die Aufgabe der axialen Arretierrückstellung. Die axiale Rückstellung des Drehgriffs in eine arretierte, das heißt verriegelte, Stellung kann auch von einer zusätzlichen Zugfeder ermöglicht werden.

Es kann vorgesehen sein, dass das federnde Element den Gebergriff in eine einer Offenstellung zugeordneten Schaltstellung zurückstellt, solange keine andere Schaltstellung erreicht ist. Als andere Schaltstellung wird dabei eine einer Geschlossenstellung zugeordnete Schaltstellung bezeichnet. Somit ist ein Feststellbremssystem erzeugbar, das beim Loslassen des Drehgebers automatisch die Offenstellung einnimmt, wenn nicht explizit eine Geschlossenstellung vorgegeben ist. Dies ist insbesondere für ein Feststellbremssystem mit stufbarer Bremswirkung nützlich, das auch als Hilfsbremse einsetzbar ist.

Nützlicherweise ist vorgesehen, dass das federnde Element zwei separate Federelemente umfasst, wobei das erste Federelement der mechanischen Sperre zugeordnet ist und das zweite Federelement der Rückführung in eine Offenstellung zugeordnet ist.

Weiterhin kann vorgesehen sein, dass das der mechanischen Sperre zugeordnete federnde Element eine Zugfeder ist.

Bevorzugterweise ist vorgesehen, dass an dem drehbaren Gebergriff eine erhabene Nase angeordnet ist, über die der drehbare Gebergriff während der Entriegelung und/oder der Drehung leichter greifbar ist. Das Vorsehen der erhabenen Nase an dem drehbaren Gebergriff ermögliche einen einfachen kontrollierten Zugriff auf die verschiedenen Funktionen des Drehgebers. Die Form der Nase kann dabei insbesondere länglich sein.

Darüber hinaus kann vorgesehen sein, dass der drehbare Gebergriff mindestens drei verschiedene Schaltstellungen aufweist. Das Vorsehen von mindestens drei verschiedenen Schaltstellungen des Drehgebers erlaubt eine Realisierung von Betriebszuständen der Feststellbremsanlage, die überein einfaches Öffnen bzw. Schließen hinausgehen. Es können zum Beispiel zusätzliche Schaltpositionen für eine stufbare Feststellbremswirkung vorgesehen sein.

In diesem Zusammenhang kann vorgesehen sein, dass eine der mindestens drei verschiedenen Schaltstellungen zum Auslösen einer Testfunktion dient. Eine Testfunktion kann beispielsweise darin bestehen, dass überprüft wird, ob die Feststellbremse des Fahrzeugs einen Anhänger halten kann, wenn dieser nicht selbst von der Feststellbremse gebremst wird.

Weiterhin kann vorgesehen sein, dass, ausgehend von der einer Offenstellung zugeordneten Schaltstellung beim Betätigen des Drehgebers, die einer Schließstellung zugeordnete Schaltstellung des Drehgebers vor der einer Teststellung zugeordneten Schaltstellung angeordnet ist. Auf diese Weise kann die üblicherweise einzuhaltende Betätigungsreihenfolge ergonomisch umgesetzt werden.

Insbesondere kann vorgesehen sein, dass, ausgehend von der einer Schließstellung zugeordnete Schaltstellung des Drehgebers, die einer Teststellung zugeordneten Schaltstellung ohne eine Bewegung des Drehschalters in axialer Richtung erreichbar ist. Da zum Einlegen der Feststellbremse bereits eine Verriegelung in axialer Richtung gelöst werden muss, ist eine weitere axiale Verriegelung nicht unbedingt notwendig.

Vorteilhafterweise ist vorgesehen, dass der Drehgeber einen Akku umfasst, der zumindest kurzfristig bei einem Ausfall einer anderweitigen Stromversorgung einen Betrieb des Drehgebers ermöglicht. Durch einen Akku wird auch bei einem Stromausfall das Betätigen der Feststellbremsanlage zumindest kurzfristig ermöglicht. Dies kann insbesondere im Defektfall sinnvoll sein, um ein Abschleppen des Fahrzeugs zu ermöglichen.

Damit zusammenhängend ist es von Nutzen, dass der Akku bei einem Ausfall einer anderweitigen Stromversorgung die Ventileinrichtung mit Energie versorgt, um ein Betätigen der Feststellbremsanlage zu ermöglichen. Der Akku kann auch außerhalb des Drehgebers angeordnet sein und beispielsweise auch ein elektrisches Steuergerät mit Energie versorgen, das die Ventileinrichtung ansteuert.

Nützlicherweise ist vorgesehen, dass das Sensorelement eine eigene Elektronik zum Aufbereiten gemessener Daten umfasst. Durch eine eigene Elektronik in dem Sensorelement des Drehgebers kann entweder ein gemessenes digitales Signal in ein analoges oder, was häufiger vorkommt, ein gemessenes analoges Signal in ein digitales umgewandelt werden. Dies ermöglicht in einfacher Weise eine Kombination des Drehgebers mit unterschiedlich ausgeführten Steuergeräten von Feststellbremsanlagen, die verschiedene Steuersignale benötigen.

Bevorzugterweise ist vorgesehen, dass das Sensorelement zwei Sensorelemente mit gegenläufiger Kennlinie umfasst. Auf diese Art ist die Ausfallsicherheit durch eine verbesserte Redundanz erhöht.

Es kann vorgesehen sein, dass das Sensorelement ein induktives Sensorelement umfasst.

Es kann auch vorgesehen sein, dass das Sensorelement ein ohmsches Sensorelement umfasst.

Weiterhin kann vorgesehen sein, dass das Sensorelement ein auf dem Halleffekt basierendes Sensorelement umfasst.

Die Verwendung eines erfindungsgemäßen Drehgebers ist insbesondere in einer elektrisch betätigbaren Feststellbremsanlage vorteilhaft.

Weiterhin kann vorgesehen sein, dass ein Leuchtmittel in dem Drehgeber angeordnet ist. Über ein in dem Drehgeber angeordnetes Leuchtmittel kann der Drehgeber seinen eigenen Status selbst anzeigen oder den Status des Feststellbremssystems anzeigen und wird insbesondere bei schlechten Lichtverhältnissen besser auffindbar.

Dabei ist nützlicherweise vorgesehen, dass ein Feststellbremsmoment zumindest abschnittsweise proportional zu einem Betätigungsweg des Drehgebers ist. Durch das Bereitstellen des Drehmomentes proportional zum Betätigungsweg, wird insbesondere bei kleinen Betätigungswegen die Dosierbarkeit der Feststellbremswirkung verbessert.

Vorzugsweise ist vorgesehen, dass die Elektronik einen eigenen Speicher umfasst in dem bestimmten Schaltstellungen des Drehgebers zugeordnete Ausgangssignale abgespeichert sind.

Besonders bevorzugt ist, dass die Zwischenwerte zwischen den bereits im Speicher abgespeicherten Ausgangssignalen über Parameter zuordnungsbar sind. Aus den bereits bekannten Ausgangssignalen kann, insbesondere wenn die Sensorkennlinien linearisierbar und die Linearisierungsparameter einmalig fest in dem Speicher abgelegt sind, die Stellung des Drehgebers rekonstruiert werden oder eine gewünschte Bremswirkung des Feststellbremssystems ermittelt werden.

Möglich ist auch, dass der Drehgeber über eine Steckverbindung mit dem Steuergerät koppelbar ist. Für Servicezwecke kann es nützlich sein, das Sensorelement von dem Steuergerät trennen zu können.

Vorteilhafterweise ist vorgesehen, dass die elektrischen Leitungen digitale Übertragungsleitungen sind.

Nützlicherweise ist vorgesehen, dass Ausgangssignale des Drehgebers über die elektrischen Leitungen mittels Pulsweitenmodulation, Frequenzmodulation oder als Bitfolge übertragen werden.

Es kann von Vorteil sein, dass das Signal an einem Feststellbremszylinderanschluss ein elektrisches Signal ist. Eine über elektrisch betriebene Stellmotoren zuspannende Feststellbremse kann über eine elektrische Signalleitung betätigt werden.

Alternativ kann vorgesehen sein, dass das Signal an einem Feststellbremszylinderanschluss ein pneumatisches Signal ist. Eine pneumatisch betätigbare Feststellbremse kann über eine pneumatische Signalleitung angesteuert werden.

Denkbar ist auch, dass das Signal an einem Feststellbremszylinderanschluss ein hydraulisches Signal ist. Über eine hydraulische Signalleitung ist eine Betätigung einer hydraulischen Feststellbremse realisierbar.

Vorzugsweise ist vorgesehen, dass das Signal an einem Anhängersteuerventilsteueranschluss ein elektrisches Signal ist. Eine Anhängersteuerung kann auf diese Weise über elektrische Signalleitungen realisiert werden.

Alternativ ist vorgesehen, dass das Signal an einem Anhängersteuerventilsteueranschluss ein pneumatisches Signal ist. Die Anhängersteuerung kann auch über eine pneumatische Signalleitung realisiert werden.

Das gattungsgemäße Verfahren wird dadurch weiterentwickelt, dass eine mechanische Sperre durch eine Auslenkung des drehbaren Gebergriffs parallel zur Drehachse entriegelt wird und dass durch anschließende Drehung des drehbaren Gebergriffs um die Drehachse ein Betriebszustand der elektrisch betätigbaren Feststellbremsanlage ausgewählt wird. Auf diese Weise werden die Vorteile und Besonderheiten des erfindungsgemäßen Drehgebers auch im Rahmen eines Verfahrens zum Betätigen einer elektrisch betätigbaren Feststellbremsanlage eines Fahrzeugs umgesetzt. Dies gilt auch für die nachfolgend angegebene besonders bevorzugte Ausführungsform des erfindungsgemäßen Verfahrens.

Dieses ist in nützlicher Weise dadurch weitergebildet, dass nach dem Entriegeln, Drehen und anschließenden Freigeben des Drehgebers die mechanische Sperre den Drehgeber wieder verriegelt.

Vorzugsweise ist dabei vorgesehen, dass eine Testfunktion der Feststellbremsanlage zeitgesteuert ausgeführt wird. Durch das zeitgesteuerte Ausführen der Testfunktion kann die ordnungsgemäße Ausführung der Testfunktion sichergestellt werden.

Nützlicherweise ist vorgesehen, dass die Testfunktion nach dem Überführen des Drehgebers in eine einer geschlossenen Feststellbremsanlage zugeordnete Schaltstellung ausgeführt wird. Auf diese Weise wird verhindert, dass der Fahrer vergisst, die Testfunktion vor dem Verlassen des Fahrzeugs auszuführen, da die Ausführung an das Betätigen der Feststellbremsanlage gekoppelt ist. Es kann dann sogar auf eine separate Schaltstellung des Drehgebers für die Feststellbremse verzichtet werden.

Besonders bevorzugt ist, dass eine Testfunktion nach dem Überführen des Drehgebers in eine der Testfunktion zugeordnete Schaltstellung ausgeführt wird. Unabhängig von einer zeitgesteuerten Ausführung der Testfunktion kann das manuelle Einleiten einer Testfunktion vorteilhaft sein.

Die Erfindung wird nun mit Bezug auf die begleitenden Zeichnungen anhand besonders bevorzugter Ausführungsformen beispielhaft erläutert.

### Es zeigen:

- Figur 1: eine Draufsicht auf einen drehbaren Gebergriff;
- Figur 2: einen seitlichen Schnitt durch einen erfindungsgemäßen Drehgeber und
- Figur3: eine Feststellbremsanlage mit einem erfindungsgemäßen Drehgeber.

In den folgenden Zeichnungen bezeichnen gleiche Bezugszeichen gleiche oder gleichartige Teile.

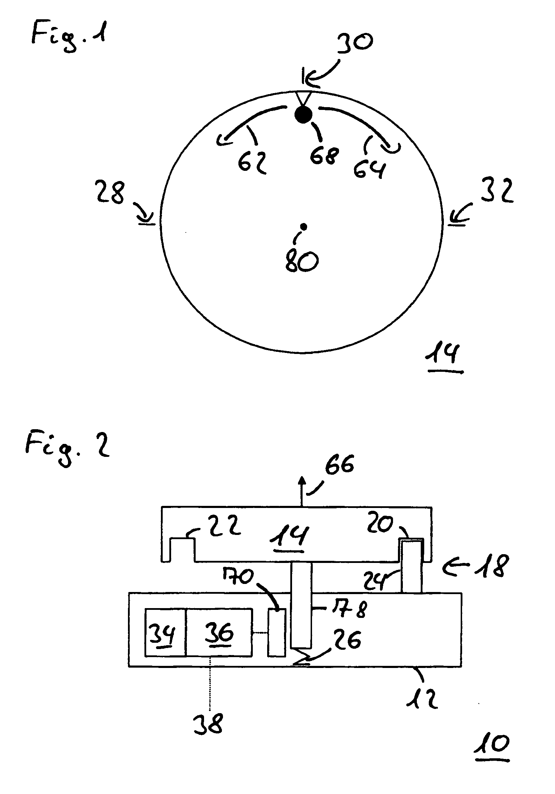

Figur 1 zeigt eine Draufsicht auf einen drehbaren Gebergriff. Ein dargestellter Gebergriff 14 ist um seinen Mittelpunkt 80 in Drehrichtungen 62, 64 drehbar, wobei Schaltstellungen 28, 30, 32 eingenommen werden können. Die aktuelle Positionierung des Gebergriffes 14 ist über eine Markierung 68 optisch feststellbar, wobei die Markierung 68 vorzugsweise an einem Rand des Gebergriffes 14 angeordnet ist und in Richtung der momentanen Schaltstellung 30 weist. Die Schaltstellung 28 ist dabei einer geöffneten Feststellbremsanlage zugeordnet, die Schaltstellung 30 einer geschlossenen Feststellbremsanlage und die Schaltstellung 32 dienen dem Auslösen einer Testfunktion. Die Testfunktion kann dabei entweder manuell ausgelöst oder beendet oder zeitgesteuert durchgeführt werden. Ist die Ausführung der Testfunktion zeitgesteuert, so kann sie auch automatisch beim Betätigen der Feststellbremsanlage, das heißt beim Überführen in die Schaltstellung 30, ausgelöst werden. Bei der Testfunktion wird zunächst die Feststellbremsanlage geschlossen und anschließen die Feststellbremse eines Anhängers wieder geöffnet, um zu prüfen, ob die Feststellbremse des Zugfahrzeugs in der Lage ist, das gesamte Fahrzeug zu halten.

Figur 2 zeigt einen seitlichen Schnitt durch einen erfindungsgemäßen Drehgeber. Ein erfindungsgemäßer Drehgeber 10 umfasst ein Sensorelement 12 an dem über eine Verbindung 78 ein Gebergriff 14 drehbar befestigt ist. Das Sensorelement 12 kann auch als Basisteil bezeichnet werden und formschlüssige Ausnehmungen Aufweisen, um eine Befestigung mit dem Fahrzeug zu ermöglichen. Der Gebergriff 14 weist weiterhin Rasten 20, 22 auf, in die in einer Verriegelungsposition ein an dem Sensorelement 12 befestigter Zapfen 24 hineinragt. Zusammen bilden die Rasten 20, 22 und der Zapfen 24 eine mechanische Sperre 18. In dem in Figur 2 dargestellten Zustand ist der Drehgeber 10 durch die mechanische Sperre 18 verriegelt und der Gebergriff 14 kann nicht um die durch das Verbindungselement 78 definierte Achse gedreht werden. Um die mechanische Sperre 18 zu öffnen und das Drehen des Gebergriffs 14 zu ermöglichen, muss der Gebergriff 14 in einer Zugrichtung 66 durch eine äußere Kraft ausgelenkt werden. Dabei wird der Gebergriff 14 entgegen einer von einem federnden Element 26 aufgebrachten Rückstellkraft aufgrund einer äußeren Einwirkung, insbesondere dem Ziehen an dem Gebergriff 14 durch einen Fahrer, ausgelenkt. In seinem ausgelenkten Zustand ruht der Zapfen 24 nicht in einer der Rasten 20, 22, weshalb die mechanische Sperre 18 geöffnet und der Gebergriff 14 nunmehr drehbar ist. Diese Drehung ist von einem Sensor 70 über die drehfest mit dem Gebergriff 14 verbundene Verbindung 78 detektierbar und kann in einer Elektronik 36 weiter aufbereitet werden. Der Sensor 70 ist dabei nur symbolhaft zu verstehen und kann insbesondere mehrere einzelne Sensoren umfassen, die auch redundant ausgelegt sein können. Die einzelnen Sensoren können dann gegenläufig angeordnete Weg-Signalkennlinien aufweisen. Die Relativbewegung zwischen der Verbindung 78 und dem feststehenden Sensorelement 12 wird mit zumindest zwei Sensoren oder Schaltern gemessen, welche durch den Sensor 70 nur angedeutet sind. Je nach Sensor 70 kann dies beispielsweise eine Umwandlung eines digitalen Messsignals in ein analoges Signal beziehungsweise, was häufiger vorkommt, die Umwandlung analoger Messgrößen in ein digitales Signal bedeuten. Eine Übertragung des Drehgeberwegs auf die einzelnen Sensoren kann dabei in radialer oder axialer Richtung erfolgen. Die Elektronik 36 ihrerseits sendet das aufbereitete Messsignal über eine elektrische Schnittstelle 38 weiter, die je nach Bedarf analog oder digital ausgeführt sein kann. Eine Redundante Ausführung der Schnittstelle 38 ist möglich und vorteilhaft. Die Stromversorgung der Elektronik 36 wird ebenfalls über die elektrische Schnittstelle 38 sichergestellt, wobei zusätzlich ein Akku 34 in dem Sensorelement 12 vorgesehen ist, um im Falle eines Stromausfalls die Funktionsfähigkeit eines Drehgebers 10 sicherzustellen.

Wird nach dem Drehen des Gebergriffs 14 der Gebergriff 14 sich selbst überlassen, das heißt die äußere Einwirkung in Zugrichtung 66 entfällt, zieht das federnde Element 26 über die Verbindung 78 den Gebergriff 14 wieder an das Sensorelement 12 heran, wodurch der Zapfen 24 erneut in eine der Rasten 20, 22 hineinragt, und somit die mechanische Sperre 18 erneut geschlossen wird. Vorteilhafterweise ist jeder Schaltposition des Gebergriffs 14 eine eigene Raste 20, 22 zur Verriegelung des Gebergriffs 14 zugeordnet. Weitere Rasten können insbesondere bei einer erwünschten Stufbarkeit der Feststellbremse vorgesehen sein. Die Form der verwendeten Rasten 20, 22 kann, um ein leichteres Eingreifen des Zapfens 24 zu ermöglichen beispielsweise spitz zulaufen. Das Vorsehen weiterer nicht dargestellter Zapfen, die in analoger Weise gleichzeitig mit dem Zapfen 24 in zugeordnete Rasten hineinragen, ist geeignet, die Stabilität der mechanischen Sperre 158 zu erhöhen.

Die Feststellbremse kann stufenlos über den Gebergriff 14 einstellbar sein, weshalb die Rasten 20, 22 beziehungsweise Ausnehmungen als Langlöcher ausgebildet sein können in welchen der Zapfen 24 bewegt wird. Falls die Schließposition erreicht ist, muss sie einrasten können, weshalb ein formschlüssiges Einrasten des Griffes möglich ist. Wird der Griff aus dieser Position noch weitergedreht, so wird die Testfunktion aktiviert, bei der die Anhängerbremse gelöst wird und das Zugfahrzeug eingebremst bleibt. Der Befehl zum Lösen der Anhängerbremse während der Testfunktion kann elektrisch an ein Anhängerbremssteuergerät gesendet werden oder pneumatisch durch Druckabsenkung in der Steuerleitung zwischen Zugfahrzeug und Anhänger übermittelt werden. Bei einer elektrischen Übermittlung des Befehls zum Öffnen der Anhängerbremse vom Handbremssteuergerät an das Anhängerbremssteuergerät kann ein Timer die Anweisung zum Öffnen der Anhängerbremse nach dem erfolgten Einlegen der Zugfahrzeugbremse für eine parametrierbare Zeitdauer bewirken. Falls die Testfunktion nicht erfolgreich ist, also das Fahrzeug wegrollt, kann der Fahrer optisch oder akustisch benachrichtigt werden und zusätzlich die Betriebsbremse betätigt werden und/oder ein Gang im Getriebe eingelegt werden oder die Kupplung geschlossen werden.

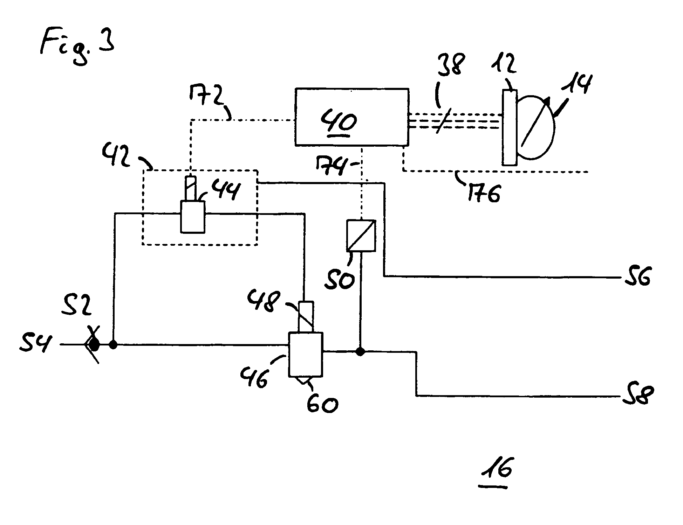

Figur 3 zeigt eine Feststellbremsanlage mit einem erfindungsgemäßen Drehgeber. Das aus Figur 2 bereits bekannte System aus Gebergriff 14 und Sensorelement 12 ist über die elektrische Schnittstelle 38 mit einem Steuergerät 40 gekoppelt, wobei das Steuergerät 40 einer Feststellbremsanlage 16 zugeordnet ist. Die dargestellte Feststellbremsanlage 16 ist eine pneumatische Feststellbremsanlage, wobei der erfindungsgemäße Drehgeber jedoch auch mit nicht pneumatischen Bremsanlagen kombinierbar ist, die insbesondere pneumatisch oder elektrisch betätigbar sein können. Die Feststellbremsanlage ist dann für ein anderes Betriebsmedium, zum Beispiel elektrisch oder hydraulisch, auszulegen. Die pneumatische Feststellbremsanlage 16 wird über einen Druckversorgungsanschluss 54 mit Druckluft versorgt, wobei im Bereich des Druckluftversorgungsanschlusses 54 aus Sicherheitsgründen üblicherweise noch ein Mehrkreisschutzventil 52 vorgesehen ist. Ein Feststellbremszylinderanschluss 58 für Feststellbremszylinder des Fahrzeugs wird über ein Relaisventil 46 mit einer Entlüftung 60 mit Druck zum Lösen der Feststellbremse beaufschlagt, wobei das Druckniveau von einem Drucksensor 50 detektierbar ist und über eine elektrische Leitung 74 an das der Feststellbremsanlage 16 zugeordnete Steuergerät 40 übertragen wird. Das Steuergerät 40 kann dabei auch über einen nicht explizit dargestellten Speicher, zum Beispiel einen EEProm oder einen Flashspeicher, verfügen. In einem derartigen Speicher können verschiedene Ausgangssignale des Sensorelements 12, die bestimmten Schaltstellungen des Drehgebers 10 zugeordnet sind, abgespeichert sein. Ist die Feststellbremse nicht pneumatisch sondern hydraulisch betätigbar, so ist insbesondere anstelle der Entlüftung 60 eine Rückführleitung für Hydraulikmedium vorzusehen. Das Relaisventil 46 umfasst einen Steuereingang 48, über den es von einer Ventileinrichtung 42, die mindestens ein Magnetventil 44 umfasst, vorgesteuert ist. Die Druckversorgung der Ventileinrichtung 42 und des Relaisventils 46 wird stromabwärts des Rückschlagventils 52 sichergestellt. Das dargestellte Feststellbremssystem 16 umfasst weiterhin einen Anhängersteuerventilsteueranschluss 56 zur Anhängersteuerventilsteuerung, wobei der dort anstehende Steuerdruck ebenfalls von der Ventileinrichtung 42 erzeugt wird. Die Ventileinrichtung 42 wird von dem der Feststellbremsanlage 16 zugeordneten Steuergerät 40 über eine elektrische Leitung 72 angesteuert, wobei die dargestellte Schaltung im Inneren der Ventileinrichtung 42 nur symbolisch zu verstehen ist. Durch das Ansteuern des Magnetventils 44 wird ein Steuerdruck an dem Steuereingang 48 des Relaisventils 46 bereitgestellt, wodurch der Feststellbremszylinderanschluss 58 der Feststellbremszylinder des Fahrzeugs mit Druck beaufschlagt wird und die Feststellbremse öffnet. Wird der Steuerdruck an dem Steuereingang 48 abgesenkt, wozu die Ventileinrichtung 42 insbesondere auch über eine eigene nicht dargestellte Entlüftung verfügt, so sinkt auch das Druckniveau an dem Feststellbremszylinderanschluss 58 über die Entlüftung 60 ab. Zur Kommunikation mit weiteren Fahrzeugsystemen und zur Fehlermeldung verfügt das Steuergerät auch über einen Anschluss 76 an ein Fahrzeugbussystem, zum Beispiel den CAN-Bus, über den auch eine Kommunikation mit einem Anhänger erfolgen kann. Insbesondere ist über den Anschluss 76 eine direkte elektrische Anhängersteuerung für einen Anhänger mit einem EBS realisierbar. Bei einem Ausfall der Stromversorgung kann die Ventileinrichtung 42 zumindest kurzfristig auch von dem in dem Sensorelement 12 angeordneten Akku 36 mit Energie versorgt werden, um ein Betätigen der Feststellbremse zu erlauben. Hierzu kann es notwendig sein, das Steuergerät 40 ebenfalls zumindest teilweise mit Energie zu versorgen, um eine Ansteuerung der Ventileinrichtung 42 zu erlauben.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Drehgeber
- 12: Sensorelement
- 14: Gebergriff
- 16: Feststellbremsanlage
- 18: mechanische Sperre
- 20: Raste
- 22: Raste
- 24: Zapfen
- 26: federndes Element
- 28: Schaltstellung Geöffnet
- 30: Schaltstellung Geschlossen
- 32: Schaltstellung Testfunktion
- 34: Akku
- 36: Elektronik
- 38: elektrische Schnittstelle
- 40: Steuergerät
- 42: Ventileinrichtung
- 44: Magnetventil
- 46: Relaisventil
- 48: Steuereingang
- 50: Drucksensor
- 52: Rückschlagventil
- 54: Anschluss Druckversorgung
- 56: Anhängersteuerventilsteueranschluss
- 58: Feststellbremszylinderanschluss
- 60: Entlüftung
- 62: Drehrichtung
- 64: Drehrichtung
- 66: Zugrichtung
- 68: Markierung
- 70: Sensor
- 72: elektrische Leitung
- 74: elektrische Leitung
- 76: Anschluss CAN-Bus
- 78: Verbindung
- 80: Mittelpunkt

## Patentansprüche

1. Drehgeber (10) mit einem in eine elektrische Schaltung eingebundenen Sensorelement (12) und einem um eine Drehachse drehbaren Gebergriff (14) für eine elektrische betätigbare Feststellbremsanlage (16) eines Fahrzeugs, wobei durch Drehung des drehbaren Gebergriffs (14) um die Drehachse verschiedene Betriebszustände der elektrisch betätigbaren Feststellbremsanlage (16) auswählbar sind, **dadurch gekennzeichnet, dass** eine mechanische Sperre (18) vorgesehen ist, die ohne äußere Einwirkung verriegelt und eine Drehung des Gebergriffs (14) verhindert.

2. Drehgeber (10) nach Anspruch 1, **dadurch gekennzeichnet, dass** die mechanische Sperre (18) durch eine Auslenkung des drehbaren Gebergriffs (14) parallel zu der Drehachse des drehbaren Gebergriffs (14) entriegelbar ist.

3. Drehgeber (10) nach Anspruch 2, **dadurch gekennzeichnet, dass** die mechanische Sperre (18) eine Kombination aus mindestens einer Raste (20, 22) und mindestens einem Zapfen (24) umfasst, wobei jeweils ein Bestandteil der mechanischen Sperre (18) an dem drehbaren Gebergriff (14) und dem Sensorelement (12) angeordnet ist und mindestens ein Zapfen (24) im verriegelten Zustand in einer Raste (20, 22) ruht.

4. Drehgeber (10) nach Anspruch 2 oder 3, **dadurch gekennzeichnet, dass** der Drehgeber (10) ein federndes Element (26) umfasst, welches ohne äußere Einwirkung die mechanische Sperre (18) in einem verriegelten Zustand hält beziehungsweise überführt.

5. Drehgeber (10) nach Anspruch 4, **dadurch gekennzeichnet, dass** das federnde Element (26) den Gebergriff (14) in eine einer Offenstellung zugeordneten Schaltstellung (28) zurückstellt, solange keine andere Schaltstellung (30, 32) erreicht ist.

6. Drehgeber (10) nach Anspruch 5, **dadurch gekennzeichnet, dass** das federnde Element (26) zwei separate Federelemente umfasst, wobei das erste Federelement der mechanischen Sperre (18) zugeordnet ist und das zweite Federelement der Rückführung in eine Offenstellung zugeordnet ist.

7. Drehgeber (10) nach einem der Ansprüche 4 bis 6, **dadurch gekennzeichnet, dass** das der mechanischen Sperre (18) zugeordnete federnde Element (26) eine Zugfeder ist.

8. Drehgeber (10) nach einem der vorhergehenden Ansprüche, **dadurch gekennzeichnet, dass** an dem drehbaren Gebergriff (14) eine erhabene Nase angeordnet ist, über die der drehbare Gebergriff (14) während der Entriegelung und/oder der Drehung leichter greifbar ist.

9. Drehgeber (10) nach einem der vorhergehenden Ansprüche, **dadurch gekennzeichnet, dass** der drehbare Gebergriff (14) mindestens drei verschiedene Schaltstellungen (28, 30, 32) aufweist.

10. Drehgeber (10) nach Anspruch 9, **dadurch gekennzeichnet, dass** eine der mindestens drei verschiedenen Schaltstellungen (28, 30, 32) zum Auslösen einer Testfunktion dient.

11. Drehgeber (10) nach Anspruch 10, **dadurch gekennzeichnet, dass** ausgehend von der einer Offenstellung zugeordneten Schaltstellung (28) beim Betätigen des Drehgebers (10) die einer Schließstellung zugeordnete Schaltstellung (30) des Drehgebers (10) vor der einer Teststellung zugeordneten Schaltstellung (32) angeordnet ist.

12. Drehgeber (10) nach Anspruch 11, **dadurch gekennzeichnet, dass**, ausgehend von der einer Schließstellung zugeordnete Schaltstellung (30) des Drehgebers (10), die einer Teststellung zugeordneten Schaltstellung (32) ohne eine Bewegung der Drehschalters (10) in axialer Richtung erreichbar ist.

13. Drehgeber (10) nach einem der vorhergehenden Ansprüche, **dadurch gekennzeichnet, dass** der Drehgeber (10) einen Akku (34) umfasst, der zumindest kurzfristig bei einem Ausfall einer anderweitigen Stromversorgung einen Betrieb des Drehgebers (10) ermöglicht.

14. Drehgeber (10) nach Anspruch 13, **dadurch gekennzeichnet, dass** der Akku (34) bei einem Ausfall einer anderweitigen Stromversorgung die Ventileinrichtung (42) mit Energie versorgt, um ein Betätigen der Feststellbremsanlage (16) zu ermöglichen.

15. Drehgeber (10) nach einem der vorhergehenden Ansprüche, **dadurch gekennzeichnet, dass** das Sensorelement (12) eine eigene Elektronik (36) zum Aufbereiten gemessener Daten umfasst.

16. Drehgeber (10) nach einem der vorhergehenden Ansprüche, **dadurch gekennzeichnet, dass** das Sensorelement (12) zwei Sensorelemente mit gegenläufiger Kennlinie umfasst.

17. Drehgeber (10) nach einem der vorhergehenden Ansprüche, **dadurch gekennzeichnet, dass** das Sensorelement (12) ein induktives Sensorelement umfasst.

18. Drehgeber (10) nach einem der vorhergehenden Ansprüche, **dadurch gekennzeichnet, dass** das Sensorelement (12) ein ohmsches Sensorelement umfasst.

19. Drehgeber (10) nach einem der vorhergehenden Ansprüche, **dadurch gekennzeichnet, dass** das Sensorelement (12) ein auf dem Halleffekt basierendes Sensorelement umfasst.

20. Drehgeber (10) nach einem der vorhergehenden Ansprüche, **dadurch gekennzeichnet, dass** ein Leuchtmittel in dem Drehgeber (10) angeordnet ist.

21. Elektrisch betätigbare Feststellbremsanlage (16) mit einem Drehgeber (10) gemäß einem der vorhergehenden Ansprüche.

22. Elektrisch betätigbare Feststellbremsanlage (16) nach Anspruch 21, **dadurch gekennzeichnet, dass** ein Feststellbremsmoment zumindest abschnittsweise proportional zu einem Betätigungsweg des Drehgebers (10) ist.

23. Elektrisch betätigbare Feststellbremsanlage (16) nach Anspruch 21 oder 22, **dadurch gekennzeichnet, dass** die Elektronik (36) einen eigenen Speicher umfasst, in dem bestimmten Schaltstellungen des Drehgebers (10) zugeordnete Ausgangssignale abgespeichert sind.

24. Elektrisch betätigbare Feststellbremsanlage (16) nach Anspruch 23, **dadurch gekennzeichnet, dass** die Zwischenwerte zwischen den bereits im Speicher abgespeicherten Ausgangssignalen über Parameter zuordnungsbar sind.

25. Elektrisch betätigbare Feststellbremsanlage (16) nach einem der Ansprüche 21 bis 24, **dadurch gekennzeichnet, dass** der Drehgeber (10) über eine Steckverbindung mit dem Steuergerät (40) koppelbar ist.

26. Elektrisch betätigbare Feststellbremsanlage (16) nach einem der Ansprüche 21 bis 25, **dadurch gekennzeichnet, dass** die elektrischen Leitungen (38) digitale Übertragungsleitungen sind.

27. Elektrisch betätigbare Feststellbremsanlage (16) nach einem der Ansprüche 21 bis 26, **dadurch gekennzeichnet, dass** Ausgangssignale des Drehgebers (10) über die elektrischen Leitungen (38) mittels Pulsweitenmodulation, Frequenzmodulation oder als Bitfolge übertragen werden.

28. Elektrisch betätigbare Feststellbremsanlage (16) nach einem der Ansprüche 21 bis 27, **dadurch gekennzeichnet**, das as Signal an einem Feststellbremszylinderanschluss (58) ein elektrisches Signal ist.

29. Elektrisch betätigbare Feststellbremsanlage (16) nach einem der Ansprüche 21 bis 27, **dadurch gekennzeichnet, dass** das Signal an einem Feststellbremszylinderanschluss (58) ein pneumatisches Signal ist.

30. Elektrisch betätigbare Feststellbremsanlage (16) nach einem der Ansprüche 21 bis 27, **dadurch gekennzeichnet, dass** das Signal an einem Feststellbremszylinderanschluss (58) ein hydraulisches Signal ist.

31. Elektrisch betätigbare Feststellbremsanlage (16) nach einem der Ansprüche 21 bis 30, **dadurch gekennzeichnet, dass** das Signal an einem Anhängersteuerventilsteueranschluss (56) ein elektrisches Signal ist.

32. Elektrisch betätigbare Feststellbremsanlage (16) nach einem der Ansprüche 20 bis 30, **dadurch gekennzeichnet, dass** das Signal an einem Anhängersteuerventilsteueranschluss (56) ein pneumatisches Signal ist. ,

33. Verfahren zum Betätigen einer elektrisch betätigbaren Feststellbremsanlage (16) eines Fahrzeugs mit einem einen drehbaren Gebergriff (14) und ein in eine elektrische Schaltung eingebundenes Sensorelement (12) umfassenden Drehgeber (10), **dadurch gekennzeichnet,**
- **dass** eine mechanische Sperre (18) durch eine Auslenkung des drehbaren Gebergriffs (14) parallel zur Drehachse entriegelt wird und
- **dass** durch anschließende Drehung des drehbaren Gebergriffs (14) um die Drehachse ein Betriebszustand der elektrisch betätigbaren Feststellbremsanlage (16) ausgewählt wird.

34. Verfahren nach Anspruch 33, **dadurch gekennzeichnet, dass** nach dem Entriegeln, Drehen und anschließenden Freigeben des Drehgebers (10) die mechanische Sperre (18) den Drehgeber (10) wieder verriegelt.

35. Verfahren nach Anspruch 33 oder 34, **dadurch gekennzeichnet, dass** eine Testfunktion der Feststellbremsanlage (16) zeitgesteuert ausgeführt wird.

36. Verfahren nach einem der Ansprüche 35, **dadurch gekennzeichnet, dass** die Testfunktion nach dem Überführen des Drehgebers (10) in eine einer geschlossenen Feststellbremsanlage (16) zugeordnete Schaltstellung (32) ausgeführt wird.

37. Verfahren nach einem der Ansprüche 33 bis 36, **dadurch gekennzeichnet, dass** eine Testfunktion nach dem Überführen des Drehgebers (10) in eine der Testfunktion zugeordnete Schaltstellung (32) ausgeführt wird.

## Claims

1. Rotary encoder (10) comprising a sensor element (12) incorporated into an electrical circuit and an encoder handle (14) rotatable about an axis of rotation for an electrically operable parking brake system (16) of a vehicle, wherein different operating conditions of said electrically operable parking brake system (16) are selectable by rotation of said rotatable encoder handle (14), **characterised in that** a mechanical locking means (18) is provided that locks without influence from the outside and prevents rotation of said encoder handle (14).

2. Rotary encoder (10) according to Claim 1, **characterised in that** said mechanical locking means (18) is adapted to be unlocked by deflection of said rotatable encoder handle (14) in parallel with the axis of rotation of said rotatable encoder handle (14).

3. Rotary encoder (10) according to Claim 2, **characterised in that** said mechanical locking means (18) comprises a combination of at least one catch (20, 22) and at least one tenon (24), with one respective component of said mechanical locking means (18) being disposed on said rotatable encoder handle (14) and said sensor element (12) whilst at least one tenon (24) rests in a catch in the locked condition.

4. Rotary encoder (10) according to Claim 2 or 3, **characterised in that** the rotary encoder (10) comprises a resilient element (26)that holds said mechanical locking means (18) in a locked condition or transfers it into this condition without any influence from the outside.

5. Rotary encoder (10) according to Claim 4, **characterised in that** said resilient element (26) resets said encoder handle (14) into a switching position associated with an opened position as long as no other switching position (30, 32) has been reached.

6. Rotary encoder (10) according to Claim 5, **characterised in that** said resilient element (26) comprises two separate spring elements whereof the first spring element is associated with said mechanical locking means (18) whilst said second spring element is associated with the return into an opened position.

7. Rotary encoder (10) according to any of the Claims 4 to 6, **characterised in that** said resilient element (26) associated with said mechanical locking means (18) is a tension spring.

8. Rotary encoder (10) according to any of the preceding Claims, **characterised in that** a protruding lug is disposed on said rotatable encoder handle (14), via which said rotatable encoder handle (14) is easier to grip during the locking action and/or rotation.

9. Rotary encoder (10) according to any of the preceding Claims, **characterised in that** said rotatable encoder handle (14) comprises at least three different switching positions (28, 30, 32).

10. Rotary encoder (10) according to Claim 9, **characterised in that** one of said at least three different switching positions (28, 30, 32) serves to trigger a test function.

11. Rotary encoder (10) according to Claim 10, **characterised in that**, starting out from said switching position (28) associated with an opened position, the switching position (30) associated with a closed position of said rotary encoder (10) is located ahead of said switching position (32) associated with a test position when said rotary encoder (10) is operated.

12. Rotary encoder (10) according to Claim 11, **characterised in that**, starting out from a switching position (30) of said rotary encoder (10), which is associated with a closed position, said switching position (32) associated with a test position can be reached without movement of said rotary switch (10) in an axial direction.

13. Rotary encoder (10) according to any of the preceding Claims, **characterised in that** said rotary encoder (10) comprises an accumulator (34) that permits the operation of the rotary encoder at least throughout a short period in the event of failure of another power supply.

14. Rotary encoder (10) according to Claim 13, **characterised in that** in the event of failure of another power supply, said accumulator (34) supplies said valve means (42) with energy so as to permit operation of the parking brake system (16).

15. Rotary encoder (10) according to any of the preceding Claims, **characterised in that** said sensor element (12) comprises a separate electronic module (36) for processing measured data.

16. Rotary encoder (10) according to any of the preceding Claims, **characterised in that** said sensor element (12) comprises two sensor elements with opposite characteristics.

17. Rotary encoder (10) according to any of the preceding Claims, **characterised in that** said sensor element (12) comprises an inductive sensor element.

18. Rotary encoder (10) according to any of the preceding Claims, **characterised in that** said sensor element (12) comprises an ohmic sensor element.

19. Rotary encoder (10) according to any of the preceding Claims, **characterised in that** said sensor element (12) comprises a sensor element based on the Hall effect.

20. Rotary encoder (10) according to any of the preceding Claims, **characterised in that** an illuminant is disposed in the rotary encoder.

21. Electrically operable parking brake system (16) comprising a rotary encoder (10) according to any of the preceding Claims.

22. Electrically operable parking brake system (16) according to Claim 21, **characterised in that** a parking brake momentum is proportional to an operating distance of said rotary encoder (10), at least in sections.

23. Electrically operable parking brake system (16) according to Claim 21 or 22, **characterised in that** said electronic module comprises a separate memory in which output signals are stored which as associated with defined switching positions of said rotary encoder (10).

24. Electrically operable parking brake system (16) according to Claim 23, **characterised in that** the intermediate values between the output signals stored already in said memory can be associated via parameters.

25. Electrically operable parking brake system (16) according to any of the Claims 21 to 24, **characterised in that** said rotary encoder (10) is adapted to be coupled to said controller (40) via a plug connection.

26. Electrically operable parking brake system (16) according to any of the Claims 21 to 25, **characterised in that** the electrical lines (38) are digital transmission lines.

27. Electrically operable parking brake system (16) according to any of the Claims 21 to 26, **characterised in that** output signals of said rotary encoder (10) are transmitted through electrical lines (38) by way of pulse width modulation, frequency modulation or as bit string.

28. Electrically operable parking brake system (16) according to any of the Claims 21 to 27, **characterised in that** the signal on a parking brake cylinder connector (58) is an electrical signal.

29. Electrically operable parking brake system (16) according to any of the Claims 21 to 27, **characterised in that** the signal on a parking brake cylinder connector (58) is a pneumatic signal.

30. Electrically operable parking brake system (16) according to any of the Claims 21 to 27, **characterised in that** the signal on a parking brake cylinder connector (58) is a hydraulic signal.

31. Electrically operable parking brake system (16) according to any of the Claims 21 to 30, **characterised in that** the signal on a trailer control valve control connector (56) is an electrical signal.

32. Electrically operable parking brake system (16) according to any of the Claims 20 to 30, **characterised in that** the signal on a trailer control valve control connector (56) is a pneumatic signal.

33. Method of operating an electrically operable parking brake system (16) of a vehicle comprising a rotary encoder (10) including a rotatable encoder handle (14) and a sensor element (12) integrated into an electrical circuit, **characterised in**
- **that** a mechanical locking means (18) is unlocked by deflection of said rotatable encoder handle (14) in parallel with the axis of rotation, and
- **that** by subsequent rotation of said rotatable encoder handle (14) about the axis of rotation an operating state of said electrically operable parking brake system (16) is selected.

34. Method according to Claim 33, **characterised in that** after unlocking, rotation and subsequent release of said rotary encoder (10) said mechanical locking means (18) locks said rotary encoder (10) again.

35. Method according to Claim 33 or 34, **characterised in that** a test function of said parking brake system (16) is carried out in a time-controlled operation.

36. Method according to any of the Claims 33 to 35, **characterised in that** the test function is carried out after transfer of said rotary encoder (10) into a switching position (32) associated with an applied parking brake system (16).

37. Method according to any of the Claims 33 to 36, **characterised in that** a test function is carried out after transfer of said rotary encoder (10) into a switching position (32) associated with said test function.

## Revendications

1. Encodeur (10) ayant un élément (12) capteur incorporé dans un circuit électrique et une poignée (14) d'encodeur pouvant tourner autour d'un axe de rotation pour un système (16) de frein de stationnement actionnable électriquement d'un véhicule, dans lequel, en faisant tourner la poignée (14) tournante de l'encodeur autour de l'axe de rotation, divers états de fonctionnement du système (16) de frein de stationnement actionnable électriquement peuvent être choisis, **caractérisé en ce qu'**il est prévu un arrêt (18) mécanique, qui, sans action extérieure, verrouille et empêche une rotation de la poignée (14) de l'encodeur.

2. Encodeur suivant la revendication 1, **caractérisé en ce que** l'arrêt (18) mécanique peut être déverrouillé parallèlement à l'axe de rotation de la poignée (14) tournante de l'encodeur par une déviation de la poignée (14) tournante de l'encodeur.

3. Encodeur suivant la revendication 2, **caractérisé en ce que** l'arrêt (18) mécanique comprend une combinaison d'au moins une encoche (20, 22) et d'au moins un tenon (24), respectivement un élément constitutif de l'arrêt (18) mécanique étant monté sur la poignée (14) tournante de l'encodeur et sur l'élément (12) capteur et au moins un tenon (24) reposant à l'état verrouillé dans une encoche (20, 22).

4. Encodeur suivant la revendication 2 ou 3, **caractérisé en ce que** l'encodeur (10) comprend un élément (26) élastique, qui maintient ou met sans action extérieure l'arrêt (18) mécanique dans un état verrouillé.

5. Encodeur suivant la revendication 4, **caractérisé en ce que** l'élément (26) élastique remet la poignée (14) de l'encodeur dans une position (28) de commutation associée à une position d'ouverture tant qu'une autre position (30, 32) de commutation n'est pas atteinte.

6. Encodeur suivant la revendication 5, **caractérisé en ce que** l'élément (26) élastique comprend deux éléments de ressort distincts, le premier élément de ressort étant associé à l'arrêt (18) mécanique et le deuxième élément de ressort étant associé au retour dans une position ouverte.

7. Encodeur suivant l'une des revendications 4 à 6, **caractérisé en ce que** l'élément (26) élastique associé à l'arrêt (18) mécanique est un ressort de traction.

8. Encodeur suivant l'une des revendications précédentes, **caractérisé en ce que**, sur la poignée (14) tournante de l'encodeur, est monté un bec en saillie, par lequel la poignée (14) tournante de l'encodeur peut être saisie facilement pendant le déverrouillage et/ou la rotation.

9. Encodeur suivant l'une des revendications précédentes, **caractérisé en ce que** la poignée (14) tournante de l'encodeur a au moins trois positions (28, 30, 32) de commutation différentes.

10. Encodeur suivant la revendication 9, **caractérisé en ce que** l'une des au moins trois positions (28, 30, 32) de commutation différentes sert au déclenchement d'une fonction de test.

11. Encodeur suivant la revendication 10, **caractérisé en ce que**, à partir de la position (28) de commutation associée à la position d'ouverture, lors de l'actionnement de l'encodeur (10), la position (30) de commutation associée à une position de fermeture de l'encodeur (10) est disposée avant une position (32) de commutation associée à une position de test.

12. Encodeur suivant la revendication 11, **caractérisé en ce que**, en partant de la position (30) de commutation associée à une position de fermeture de l'encodeur (10), la position (32) de commutation associée à une position de test peut être atteinte, sans déplacement de l'encodeur (10) dans la direction axiale.

13. Encodeur suivant l'une des revendications précédentes, **caractérisé en ce que** l'encodeur (10) comprend un accumulateur (34), qui permet, au moins brièvement, en cas de panne d'une autre alimentation en courant, de faire fonctionner l'encodeur (10).

14. Encodeur suivant la revendication 13, **caractérisé en ce que** l'accumulateur (34) alimente, en cas de panne d'une autre alimentation en courant, le dispositif (42) de vanne en énergie, pour permettre un actionnement du système (16) de frein de stationnement.

15. Encodeur suivant l'une des revendications précédentes, **caractérisé en ce que** l'élément (12) capteur comprend une électronique (36) qui lui est propre pour le traitement de données mesurées.

16. Encodeur suivant l'une des revendications précédentes, **caractérisé en ce que** l'élément (12) capteur comprend deux éléments capteurs ayant des caractéristiques opposées.

17. Encodeur suivant l'une des revendications précédentes, **caractérisé en ce que** l'élément (12) capteur est un élément capteur inductif.

18. Encodeur suivant l'une des revendications précédentes, **caractérisé en ce que** l'élément (12) capteur est un élément capteur ohmique.

19. Encodeur suivant l'une des revendications précédentes, **caractérisé en ce que** l'élément (12) capteur comprend un élément capteur reposant sur un effet Hall.

20. Encodeur suivant l'une des revendications précédentes, **caractérisé en ce qu'**un moyen d'éclairage est monté dans l'encodeur (10).

21. Système (16) de frein de stationnement actionnable électriquement comprenant un encodeur (10) suivant l'une des revendications précédentes.

22. Système (16) de frein de stationnement actionnable électriquement suivant la revendication 21, **caractérisé en ce qu'**un couple de frein de stationnement est proportionnel, au moins par segment, à un trajet d'actionnement de l'encodeur (10).

23. Système (16) de frein de stationnement actionnable électriquement suivant la revendication 21 ou 22, **caractérisé en ce que** l'électronique (36) comprend une mémoire qui lui est propre, dans laquelle sont mémorisés des signaux de sortie associés à des positions de commutation déterminées de l'encodeur (10).

24. Système (16) de frein de stationnement actionnable électriquement suivant la revendication 23, **caractérisé en ce que** les valeurs intermédiaires entre les signaux de sortie déjà mémorisés dans la mémoire peuvent être associées par des paramètres.

25. Système (16) de frein de stationnement actionnable électriquement suivant l'une des revendications 21 à 24, **caractérisé en ce que** l'encodeur (10) peut être relié à l'appareil (40) de commande par une liaison par enfichage.

26. Système (16) de frein de stationnement actionnable électriquement suivant l'une des revendications 21 à 25, **caractérisé en ce que** les lignes (38) électriques sont des lignes de transmission numériques.

27. Système (16) de frein de stationnement actionnable électriquement suivant l'une des revendications 21 à 26, **caractérisé en ce que** des signaux de sortie de l'encodeur (10) sont transmis par les lignes (38) électriques au moyen d'une modulation en largeur d'impulsion, d'une modulation de fréquence ou sous la forme d'une séquence de bits.

28. Système (16) de frein de stationnement actionnable électriquement suivant l'une des revendications 21 à 27, **caractérisé en ce que** le signal sur une borne (58) de cylindre de frein de stationnement est un signal électrique.

29. Système (16) de frein de stationnement actionnable électriquement suivant l'une des revendications 21 à 27, **caractérisé en ce que** le signal sur un raccord (58) de cylindre de frein de stationnement est un signal pneumatique.

30. Système (16) de frein de stationnement actionnable électriquement suivant l'une des revendications 21 à 27, **caractérisé en ce que** le signal sur un raccord (58) de cylindre de frein de stationnement est un signal hydraulique.

31. Système (16) de frein de stationnement actionnable électriquement suivant l'une des revendications 21 à 30, **caractérisé en ce que** le signal sur une borne (56) de commande de vanne de commande de remorque est un signal électrique.

32. Système (16) de frein de stationnement actionnable électriquement suivant l'une des revendications 20 à 30, **caractérisé en ce que** le signal sur un raccord (56) de commande de vanne de commande de remorque est un signal pneumatique.

33. Procédé d'actionnement d'un système (16) de frein de stationnement actionnable électriquement d'un véhicule ayant un encodeur (10) comprenant une poignée (14) tournante d'encodeur et un élément (12) capteur inséré dans un circuit électrique, **caractérisé**
- **en ce qu'**un arrêt (18) mécanique est déverrouillé parallèlement à l'axe de rotation par une déviation de la poignée (14) tournante de l'encodeur et
- **en ce que**, par une rotation ensuite de la poignée (14) tournante de l'encodeur autour de l'axe de rotation, un état de fonctionnement du système (16) de frein de stationnement actionnable électriquement peut être choisi.

34. Procédé suivant la revendication 33, **caractérisé en ce que**, après le déverrouillage de la rotation et ensuite la libération de l'encodeur (10), l'arrêt (18) mécanique reverrouille l'encodeur (10).

35. Procédé suivant la revendication 33 ou 34, **caractérisé en ce qu'**une fonction de test du système (16) de frein de stationnement est réalisée d'une manière commandée dans le temps.

36. Procédé suivant la revendication 35, **caractérisé en ce que** la fonction de test est réalisée après le passage de l'encodeur (10) dans une position (32) de commutation associée à un système (16) de frein de stationnement fermée.

37. Procédé suivant l'une des revendications 33 à 36, **caractérisé en ce qu'**une fonction de test est réalisée après le passage de l'encodeur (10) dans une position (32) de commutation associée à la fonction de test.
